# EUROPEAN PATENT APPLICATION

(11) **EP 1 070 486 A2**
(43) Date of publication of application: **24.01.2001**
(21) Application number: 00115737.9
(22) Date of filing: 21.07.2000
(51) Int. Cl.: A61C 13/30

(54) **Pin for use in dentistry**

(30) Priority: 23.07.1999 IT BO990417
(71) Applicant: Cellentani, Sergio, 40050 Dozza Molese (IT); Presta, Antonio, 48100 Ravenna (IT)
(72) Inventor: Cellentani, Sergio, 40050 Dozza Molese (IT); Presta, Antonio, 48100 Ravenna (IT)
(74) Representative: Cerbaro, Elena, Dr.

(57) **Abstract**

A substantially cylindrical pin (1) for use in dentistry and structurally defined by a bundle of fibers (10) embedded in an epoxy resin matrix (11) and wound substantially spirally about a longitudinal axis (A) of the pin (1).

## Description

The present invention relates to a pin for use in dentistry.

More specifically, the present invention relates to a pin for use in dentistry, which is particularly suitable for reinforcing the root of devitalized teeth with sufficient residual crown, and, in prostheses, for reconstructing broken teeth; to which application the following description refers purely by way of example.

As is known, broken teeth are reconstructed by applying a dental prosthesis to the root of the tooth embedded in the gum.

The prosthesis is normally fixed integral with the root of the tooth by means of a supporting pin, which is inserted, with the interposition of adhesive, inside an axial hole formed by widening the root canal in the tooth, so that an end portion of the pin projects outwards of the root. The end portion is coated with composite material, which, when set and milled, defines a stump to which the prosthesis is fitted by means of adhesive.

Currently used pins for connecting a dental prosthesis to the root of a tooth are substantially cylindrical, and comprise a bundle of (e.g. carbon) fibers embedded in an epoxy resin matrix and extending parallel to the longitudinal axis of the pin.

On account of the pin structure, a tooth reconstructed using a known pin of the above type has a fairly short life, due to the stress to which the prosthesis is subjected during mastication being transmitted to the root of the tooth substantially exclusively along the pin axis. That is to say, the stress transmitted to the pin during mastication is transmitted by the pin to the root of the tooth on the one hand, and to the stump on the other, substantially exclusively in the form of stress concentrated at the opposite ends of the pin.

Using known pins of the above type, mastication stress is therefore converted into concentrated fatigue stress capable of cracking the prosthesis and, more importantly, the root of the tooth in a fairly short space of time.

A further drawback of known pins of the above type is the fairly low coefficient of friction between the outer lateral surface of the pin and the prosthesis in the prosthesis removal and mounting direction. This low surface friction in no way prevents the prosthesis from shifting in a direction parallel to the longitudinal axis of the pin, which is why adhesive must be used to fix the prosthesis permanently integral with the root by means of the pin.

It is an object of the present invention to provide a supporting pin designed to eliminate the aforementioned drawbacks.

According to the present invention, there is provided a pin for use in dentistry, and for fixing a dental prosthesis integral with a root of a respective tooth for reconstruction; said pin being substantially cylindrical with a longitudinal axis, and comprising a resin matrix and a bundle of fibers immersed in the resin matrix; and said pin being characterized in that each said fiber in said bundle is wound about and along said longitudinal axis.

A non-limiting embodiment of the present invention will be described by way of example with reference to the accompanying drawings, in which:
Figure 1 shows an axial section of a tooth reconstructed using a pin in accordance with the teachings of the present invention;
Figure 2 shows a schematic view in perspective of the Figure 1 pin;
Figure 3 shows a larger-scale view of a detail in Figure 2;
Figures 4, 5, 6 and 7 show respective variations of the Figure 2 pin.

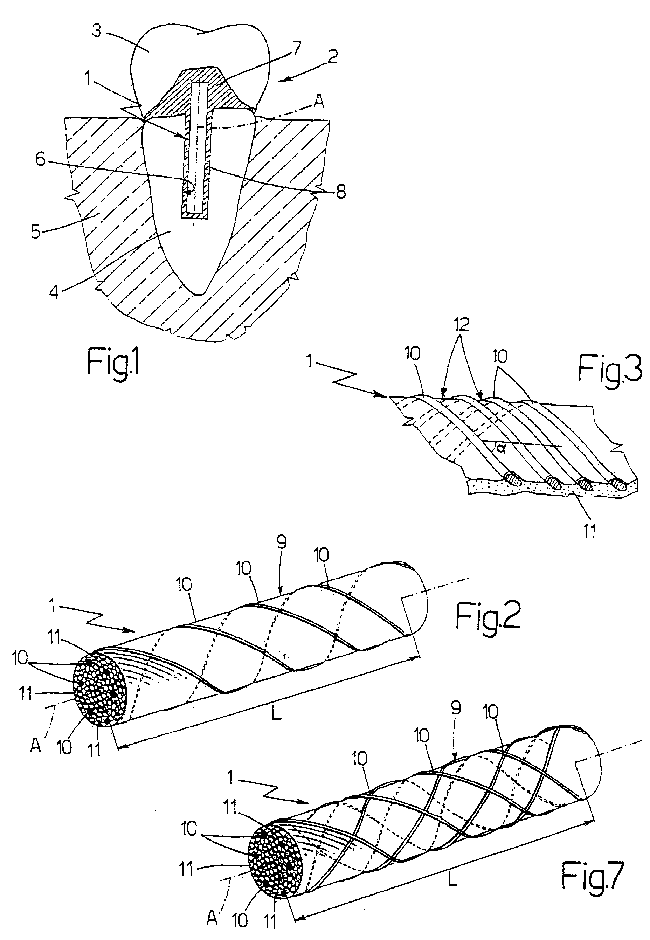

Number 1 in Figures 1 and 2 indicates as a whole a pin for reconstructing a tooth 2 by fitting a dental prosthesis 3 to a root 4 of the tooth embedded in a gum 5.

With reference to Figure 1, part of pin 1 is inserted inside an axial hole 6, formed by widening the canal of root 4, so that an end portion of pin 1 projects from root 4; and the end portion is coated with composite material, which, when set and milled, defines a stump 7 to which prosthesis 3 is fitted.

To fix prosthesis 3 integral with root 4 of the tooth, an adhesive 8 is interposed between the outer lateral surface 9 of pin 1 and the inner surface of hole 6, and directly between stump 7 and prosthesis 3.

It should be pointed out that root 4 of the tooth may be artificial, i.e. defined by a self-tapping stud of metal or similar material, as used widely in more popular implantation techniques.

With reference to Figure 2, pin 1 is substantially cylindrical and defined by a bundle of fibers 10 embedded in a matrix 11 of epoxy resin or similar. Each of fibers 10 in the bundle is preferably, though not necessarily, made of carbon or a material such as KEVLAR (registered trademark), quartz or similar, extends the full length L of pin 1, and winds about and along the longitudinal axis A of pin 1 along a preferably, though not necessarily, helical path, which, in the example shown, has a constant pitch p, but which may also have a variable pitch p.

With reference to Figures 2 and 3, the fibers 10 in the bundle located at outer lateral surface 9 of pin 1 define, on substantially cylindrical outer lateral surface 9, a number of helical grooves 12 extending in a direction substantially crosswise to longitudinal axis A, and which impart to pin 1 the appearance of a screw portion. More specifically, each groove 12 encounters the generating lines of outer lateral surface 9 of pin 1 at an angle α of, in the example shown, 30 degrees.

Any axial and bending stress is therefore transmitted between prosthesis 3, stump 7, pin 1 and root 4 in the same way as between a screw and the body in which the screw is torqued, thus improving axial mechanical connection of pin 1 to root 4 and to stump 7. Moreover, the substantially screwlike structure of pin 1 provides for distributing stress substantially evenly along the whole of pin 1, and substantially preventing breakage of root 4 by any concentrated fatigue stress transmitted by pin 1 to root 4.

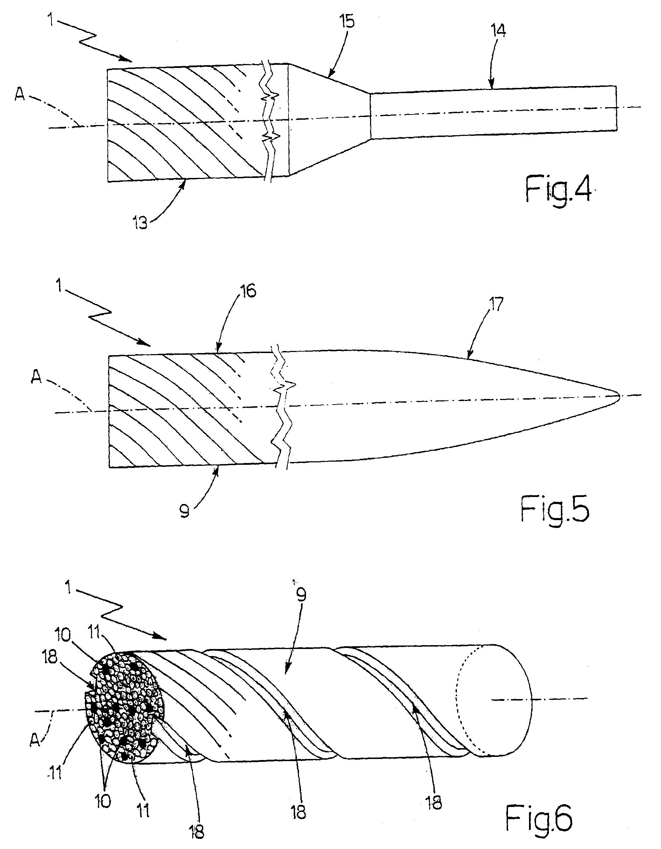

In the Figure 4 variation, pin 1 is defined by two substantially cylindrical end portions 13 and 14, which have circular sections of different diameters and are connected to each other by a truncated-cone-shaped intermediate portion 15.

In the Figure 5 variation, pin 1 comprises a substantially cylindrical first end portion 16 connected directly to a substantially ogival second end portion 17.

In the Figure 6 variation, pin 1 has two rectangular-section grooves 18 along outer lateral surface 9 to further improve connection of the pin to prosthesis 3 and to stump 7, and to prevent relative rotation of prosthesis 3 and stump 7 about longitudinal axis A. In the example shown, grooves 18 extend along the same paths, i.e. helical, as fibers 10, but may also be straight.

In further variations not shown, grooves 18 have square, circular, dovetailed or similar sections; and the number of grooves 18 on outer lateral surface 9 of pin 1 may obviously be other than two.

Operation of pin 1 is easily deducible from the foregoing description with no further explanation required.

The advantages of the pin according to the present invention are as follows: the bundle of substantially helical fibers 10 forms a connecting and supporting system capable of transmitting any mechanical stress on prosthesis 3 evenly along the whole structure of root 4 of the tooth, and so preventing concentrated, localized stress on root 4.

The lay of grooves 12 crosswise to longitudinal axis A improves retention of pin 1 inside hole 6, i.e. the widened root canal, so much so as to eliminate any risk of withdrawal; improves adhesion and stability of the composite reconstruction and stump 7 construction materials; and also enables a reduction in the amount of adhesive 8 or cement required to fix pin 1 integral with root 4 of the tooth.

In the Figure 6 variation, grooves 18 on outer lateral surface 9 provide for firmer fastening of the reconstructed tooth 2, even in the presence of rotary mastication stress coaxial with longitudinal axis A.

Clearly, changes may be made to pin 1 as described and illustrated herein without, however, departing from the scope of the present invention.

In particular, as shown in Figure 7, fibers 10 in the bundle may be wound partly in a right-hand and partly in a left-hand spiral with a constant and/or variable pitch.

## Claims

1. A pin (1) for use in dentistry, and for fixing a dental prosthesis (3) integral with a root (4) of a respective tooth (2) for reconstruction; said pin (1) having a longitudinal axis (A), and comprising a resin matrix (11) and a bundle of fibers (10) immersed in the resin matrix (11); and said pin (1) being characterized in that each said fiber (10) in said bundle is wound about and along said longitudinal axis (A).

2. A pin as claimed in Claim 1, wherein each said fiber (10) extends about said longitudinal axis (A) in a respective substantially cylindrical spiral.

3. A pin as claimed in Claim 2, wherein each said cylindrical spiral has a constant pitch.

4. A pin as claimed in any one of the foregoing Claims, characterized by comprising an ogival end portion (17).

5. A pin as claimed in one of Claims 1 to 3, characterized by comprising two cylindrical portions (13, 14) of different diameters and connected to each other by a truncated-cone-shaped intermediate portion (15).

6. A pin as claimed in any one of the foregoing Claims, characterized by having at least one longitudinal groove (18) on its outer lateral surface (9).

7. A pin as claimed in Claim 6, wherein said groove (18) has a substantially rectangular section.

8. A pin as claimed in Claim 6, wherein the section of said groove (18) is square, circular, dovetailed or similar.

9. A pin as claimed in any one of the foregoing Claims, wherein said fibers (10) are made selectively of carbon, KEVLAR (registered trademark), quartz or similar.

10. A pin as claimed in any one of the foregoing Claims, wherein said bundle comprises a first and a second portion of fibers (10) wound about and along said longitudinal axis (A) in a right-hand and left-hand spiral respectively.
